Europäisches Patentamt

(19) European Patent Office

Office européen des brevets

(11) EP 0 953 253 B1

(12) **EUROPEAN PATENT SPECIFICATION**

(45) Date of publication and mention
of the grant of the patent:
**14.06.2006 Bulletin 2006/24**

(21) Application number: **98946664.4**

(22) Date of filing: **19.10.1998**

(51) Int Cl.:
***H04N 7/26*** (2006.01)

(86) International application number:
**PCT/IB1998/001653**

(87) International publication number:
**WO 1999/026416 (27.05.1999 Gazette 1999/21)**

(54) **MOTION-COMPENSATED PREDICTIVE IMAGE ENCODING AND DECODING**

BEWEGUNGSKOMPENSIERTE PRÄDIKTIVE BILDCODIERUNG UND -DECODIERUNG

CODAGE ET DECODAGE PREDICTIFS D'IMAGE A COMPENSATION DE MOUVEMENT

(84) Designated Contracting States:
**DE FR GB SE**

(30) Priority: **17.11.1997 EP 97402764**
**13.02.1998 EP 98200460**

(43) Date of publication of application:
**03.11.1999 Bulletin 1999/44**

(73) Proprietor: **Koninklijke Philips Electronics N.V.**
**5621 BA Eindhoven (NL)**

(72) Inventors:
• **DE HAAN, Gerard**
**NL-5656 AA Eindhoven (NL)**

• **BAGNI, Daniele**
**NL-5656 AA Eindhoven (NL)**

(74) Representative: **Steenbeek, Leonardus Johannes**
**Philips**
**Intellectual Property & Standards**
**P.O. Box 220**
**5600 AE Eindhoven (NL)**

(56) References cited:
**EP-A1- 0 648 052      EP-A1- 0 720 355**
**JP-A- 9 284 777**

## Description

The invention relates to a method of motion-compensated predictively encoding and decoding, image signals according to the preamble of the claims 1 and 3, respectively.

The invention also relates to a device for motion -compensated predictively decoding image signals according to the preamble of claim 6.

Such a encoding and decoding method and such a device are known from JP-A-9284777.

The H.263 standard for low bit-rate video-conferencing [1]-[2] is based on a video compression procedure which exploits the high degree of spatial and temporal correlation in natural video sequences. The hybrid DPCM/DCT coding removes temporal redundancy using inter-frame motion compensation. The residual error images are further processed by block Discrete Cosine Transform (DCT), which reduces spatial redundancy by de-correlating the pixels within a block, and concentrates the energy of the block itself into a few low order coefficients. The DCT coefficients are then quantized according to a fixed quantization matrix that is scaled by a Scalar Quantization factor (SQ). Finally, Variable Length Coding (VLC) achieves high encoding efficiency and produces a bit-stream, which is transmitted over ISDN (digital) or PSTN (analog) channels, at constant bit-rates. Due to the intrinsic structure of H.263, the final bit-stream is produced at variable bit-rate, hence it has to be transformed to constant bit-rate by the insertion of an output buffer which acts as feedback controller. The buffer controller has to achieve a target bit-rate with consistent visual quality, low delay and low complexity. It monitors the amount of bits produced and dynamically adjusts the quantization parameters, according to its fullness status and to the image complexity.

The H.263 coding standard defines the techniques to be used and the syntax of the bit-stream. There are some degrees of freedom in the design of the encoder. The standard puts no constraints about important processing stages such as motion estimation, adaptive scalar quantization, and bit-rate control.

JP-A-9284777 discloses a method for improving the motion compensation of the motion picture coding at a low rate by eliminating the need to transmit motion vectors. Motion compensated pictures can be obtained by interpolating the same set of motion vectors obtained at the encoder and decoder, based on their position from the reference frame picture. Only the difference between the motion compensated pictures and the source pictures are transmitted to the decoder. Motion vectors for the frame pictures are obtained by interpolating the motion vector between the reference frame picture and a predicted frame picture.

It is *inter alia,* an object of the invention to improve the known motion compensated predictive image encoding and decoding techniques. To this end, a first aspect of he invention provides an encoding method as defined in the characterizing part of claim 1. A second aspect of the invention provides a decoding method and device as defined in claims 3 and 6. Further aspects of the invention provide a multimedia apparatus (claim 7) and a display apparatus (claim 8). Advantageous embodiments are defined in the dependent claims.

These and other aspects of the invention will be apparent from and elucidated with reference to the embodiments described hereinafter.

In the drawings:

Fig. 1 shows a basic DPCM/DCT video compression block diagram in accordance with the present invention;
Fig. 2 shows a temporal prediction unit in accordance with the present invention;
Fig. 3 shows a decoder block diagram in accordance with the present invention; and
Fig. 4 shows a image signal detection device in accordance with the present invention.

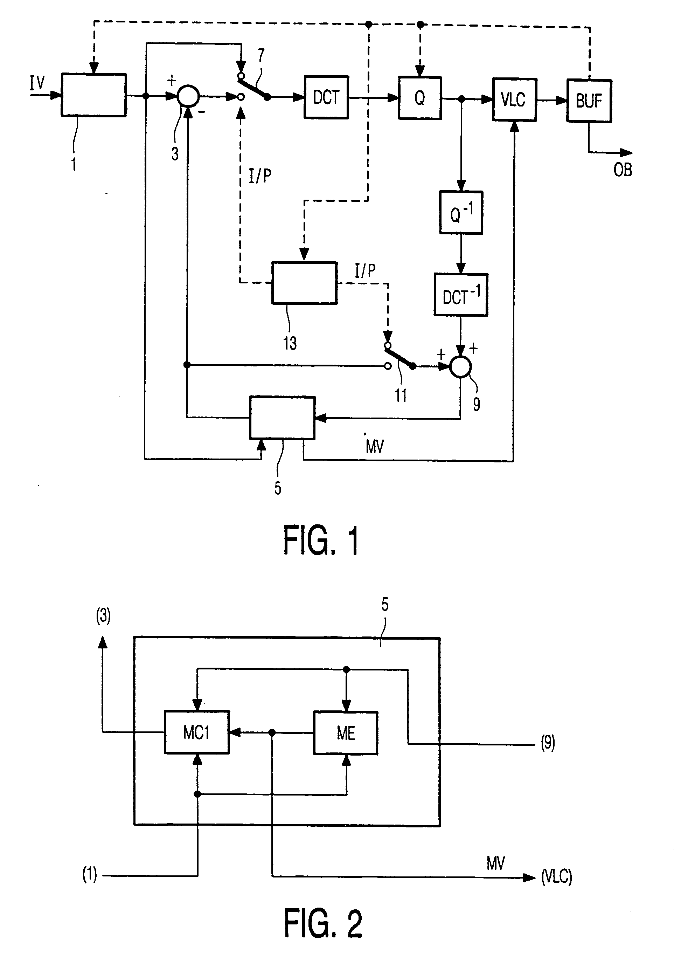

In the image encoder of Fig. 1, an input video signal IV is applied to a frame skipping unit 1. An output of the frame skipping unit 1 is connected to a non-inverting input of a sub tracer 3 and to a first input of a change-over switch 7.The output of the frame skipping unit 1 further supplies a current image signal to a temporal prediction unit 5. An inverting input of the sub tracer 3 is connected to an output of the temporal prediction unit 5. A second input of the change-over switch 7 is connected to an output of the sub tracer 3. An output of the change-over switch 7 is connected to a cascade arrangement of a Discrete Cosine Transformation encoder DCT and a quantizing unit Q. An out of the quantizing unit Q is connected to an input of a variable length encoder VLC, an output of which is connected to a buffer unit BUF that supplies an output bit-stream OB.

The output of the quantizing unit Q is also connected to a cascade arrangement of a de-quantizing unit $Q^{-1}$ and a DCT decoder $DCT^{-1}$. An output of the DCT decoder $DCT^{-1}$ is coupled to a first input of an adder 9, a second input of which is coupled to the output of the temporal prediction unit 5 thru a switch 11. An output of the adder 9 supplies a reconstructed previous image to the temporal prediction unit 5. The temporal prediction unit 5 calculates motion vectors MV which are also encoded by the variable length encoder VLC. The buffer unit BUF supplies a control signal to the quantizing unit Q, and to a coding selection unit 13 which supplies an Intra-frame / Predictive encoding control signal I/P to the switches 7 and 11. If intra-frame encoding is carried out, the switches 7, 11 are in the positions shown in Fig. 1.

As shown in Fig. 2, the temporal prediction unit 5 includes a motion estimator ME and a motion-compensated interpolator MCI which both receive the current image from the frame skipping unit 1 and the reconstructed previous image from the adder 9. The motion vectors MV calculated by the motion estimator ME are applied to the motion-compensated interpolator MCI and to the variable length encoder VLC.

In this disclosure we introduce a new method for H.263 low bit-rate video encoders and decoders, where almost no information is transmitted about the motion vectors (NO-MV). The NO-MV method is based on the possibility that the video decoder can calculate its own motion vectors, or can predict the motion vectors starting from an initial motion information received from the encoder. Even if the method should be quite independent on the motion estimation strategy, we will present it jointly to our new motion estimator, since we think that the best performances will be achieved when the two techniques are used together.

Thanks to our approach, we achieve a superior image quality compared to "classical" H.263 standard video terminals, without increasing the final bit-rate. In fact the bit-budget required to encode and transmit the motion information can be saved and re-used for a finer quantization of DCT coefficients, thus yielding a better spatial resolution (sharpness) pictures. On the other hand, it is also possible to maintain the typical H.263 image quality while decreasing the final bit-rate, due to no motion information transmission, thus increasing the channel efficiency.

As shown in Fig. 1, the H.263 video compression is based on an inter-frame DPCM/DCT encoding loop: there is a motion compensated prediction from a previous image to the current one and the prediction error is DCT encoded. At least one frame is a reference frame, encoded without temporal prediction. Hence the basic H.263 standard has two types of pictures: I-pictures that are strictly intra-frame encoded, and P-pictures that are temporally predicted from earlier frames.

The basic H.263 motion estimation and compensation stages operate on macroblocks. A macro-block (MB) is composed by four luminance (Y) blocks, covering a 16 16 area in a picture, and two chrominance blocks (U and V), due to the lower chrominance resolution. A block is the elementary unit over which DCT operates, it consists of 88 pixels. The coarseness of quantization is defined by a quantization parameter for the first three layers and a fixed quantization matrix which sets the relative coarseness of quantization for each coefficient. Frame skipping is also used as a necessary way to reduce the bit-rate while keeping an acceptable picture quality. As the number of skipped frames is normally variable and depends on the output buffer fullness, the buffer regulation should be related in some way to frame skipping and quantizer step size variations.

In the H.263 main profile, one motion vector per MB is assigned. The motion estimation strategy is not specified, but the motion vectors range is fixed to [-16, + 15.5] pixels in a picture for both components. This range can be extended to [-31.5, +31.5] when certain options are used. Every macro-block vector (MV) is then differentially encoded with a proper VLC.

The motion estimation plays a fundamental role in the encoding process, since the quality of temporally predicted pictures strongly depends on the motion vectors accuracy and reliability. The temporal prediction block diagram is shown in Fig. 2.

For estimating the true motion from a sequence of pictures we departed from the high quality 3-Dimensional Recursive Search block matching algorithm, presented in [4] and [5]. Unlike the more expensive full-search block matchers that estimate all the possible displacements within a search area, this algorithm only investigates a very limited number of possible displacements. By carefully choosing the candidate vectors, a high performance can be achieved, approaching almost true motion, with a low complexity design. Its attractiveness was earlier proven in an IC for SD-TV consumer applications [6].

In block-matching motion estimation algorithms, a displacement vector, or motion vector $\bar{d}(\bar{b}_c,t)$, is assigned to the center $\bar{b}_c=(x_c,y_c)^{tr}$ of a block $B(\bar{b}_c)$ in the current image $I(\bar{x},t)$, where tr means transpose. The assignment is done if $B(\bar{b}_c)$ matches a similar block within a search area $SA(\bar{b}_c)$, also centered at $\bar{b}_c$, but in the previous image $I(\bar{x},t\text{-}T)$, with $T = nT_q$ (n integer) representing the time interval between two subsequent decoded images. The similar block has a center which is shifted with respect to $\bar{b}_c$ over the motion vector $\bar{d}(\bar{b}_c,t)$. To find $\bar{d}(\bar{b}_c,t)$, a number of candidate vectors $\bar{C}$ are evaluated applying an error measure $e(\bar{C},\bar{b}_c,t)$ to quantify block similarity.

The pixels in the block $B(\bar{b}_c)$ have the following positions:

$$(x_c - X/2 \le x \le x_c + X/2)$$

$$(y_c - Y/2 \le y \le y_c + Y/2)$$

with X and Y the block width and block height respectively, and $\bar{x}=(x,y)^{tr}$ the spatial position in the image.

The candidate vectors are selected from the candidate set $CS(\bar{b}_c,t)$, which is determined by:

$$CS(\overline{b}_c,t) = \left\{ \begin{array}{l} (\overline{d}(\overline{b}_c - \binom{X}{Y},t) + \overline{U}_1(\overline{b}_c), \\ (\overline{d}(\overline{b}_c - \binom{-X}{Y},t) + \overline{U}_2(\overline{b}_c), \\ (\overline{d}(\overline{b}_c - \binom{0}{-2Y},t - T)) \end{array} \right\} \qquad (1)$$

where the update vectors $\overline{U}_1(\overline{b}_c)$ and $\overline{U}_2(\overline{b}_c)$ are randomly selected from an update set US, defined as:

$$US(\overline{b}_c) = US_i(\overline{b}_c) \bigcup US_f(\overline{b}_c)$$

with the integer updates $US_i(\overline{b}_c)$ stated by:

$$US_i(\overline{b}_c) = \left\{ \begin{array}{l} \binom{0}{0}, \\ \binom{0}{1}, \binom{0}{-1}, \binom{1}{0}, \binom{-1}{0}, \\ \binom{0}{2}, \binom{0}{-2}, \binom{2}{0}, \binom{-2}{0}, \\ \binom{0}{3}, \binom{0}{-3}, \binom{3}{0}, \binom{-3}{0} \end{array} \right\} \qquad (2)$$

The fractional updates $US_f(\overline{b}_c)$, necessary to realise half-pixel accuracy, are defined by:

$$US_f(\overline{b}_c) = \left\{ \begin{bmatrix} 0 \\ \frac{1}{2} \end{bmatrix}, \begin{bmatrix} 0 \\ -\frac{1}{2} \end{bmatrix}, \begin{bmatrix} \frac{1}{2} \\ 0 \end{bmatrix}, \begin{bmatrix} -\frac{1}{2} \\ 0 \end{bmatrix} \right\} \qquad (3)$$

Either $\overline{U}_1(\overline{b}_c)$ or $\overline{U}_c(\overline{b}_c)$ equals the zero update.

From these equations it can be concluded that the candidate set consists of spatial and spatio-temporal prediction vectors from a 3-D neighborhood and an updated prediction vector. This implicitly assumes spatial and/or temporal consistency. The updating process involves updates added to either of the spatial predictions.

The displacement vector $\overline{d}(\overline{b}_c,t)$, resulting from the block-matching process, is a candidate vector $\overline{C}$ which yields the minimum value of the error function $e(\overline{C}, \overline{b}_c,t)$ :

$$\overline{d}(\overline{b}_c,t) = \{\overline{C} \epsilon CS \mid e(\overline{C} \overline{b}_c,t) \leq e(\overline{V},\overline{b}_c,t)) \\ \forall(\overline{V} \epsilon CS(\overline{b}_c,t))\}$$

The error function is a cost function of the luminance values, $I(\overline{x},t)$, and those of the shifted block from the previous field, $I(\overline{x}-\overline{C},t-T)$, summed over the block $B(\overline{b}_c)$ . A common choice, which we also use, is the Sum of the Absolute Differences (SAD). The error function is defined by:

$$e(\overline{C},\overline{b}_c,t) \quad \overset{= SAD(\overline{C},\overline{b}_c,t)}{= \sum_{\overline{x} \in B(\overline{b}_c)} |I(\overline{x},t) - I(\overline{x}-\overline{C},t-T)|} \tag{5}$$

To further improve the motion field consistency, the estimation process is iterated several times, using the motion vectors calculated in the previous iteration to initialize the current iteration, as temporal candidate vectors. During the first and the third iterations, both previous and current images are scanned from top to bottom and from left to right, that is in the "normal video" scanning direction. On the contrary, the second and fourth iteration are executed with both the images scanned in "anti-video" direction, from bottom to top and from right to left.

The candidate vectors are selected from the new candidate set $CS'(\overline{b}_c,t)$, defined by:

$$CS'(\overline{b}_c,t) = \left\{ \begin{array}{l} (\overline{d}(\overline{b}_c - \begin{bmatrix} X \\ (-1)^{i+1}Y \end{bmatrix},t) + \overline{U}_1(\overline{b}_c), \\ (\overline{d}(\overline{b}_c - \begin{bmatrix} -X \\ (-1)^{i+1}Y \end{bmatrix},t) + \overline{U}_2(\overline{b}_c), \\ \overline{d}_i \end{array} \right\}$$

where

$$\overline{d}_i = \overline{d}(\overline{b}_c - \begin{pmatrix} 0 \\ -2Y \end{pmatrix},t-T)$$

for i = 1, at every first iteration on all image pair, and

$$\overline{d}_i = \overline{d}(\overline{b}_c - \begin{bmatrix} 0 \\ (-1)^i 2Y \end{bmatrix},t)$$

for i ≥ 2, with i indicating the current iteration number.

Furthermore, the first and second iteration are applied on pre-filtered copies of the two decoded images and without sub-pixel accuracy, while the third and fourth iteration are done directly on the original (decoded) images and produce a half-pixel accurate motion vectors.

The pre-filtering consists of a horizontal average over four pixels:

$$I_{pf}(x,y,t) = \frac{1}{4} \sum_{k=1}^{4} I(x\,\underline{div}\,4+k,y,t) \tag{6}$$

where I(x, y, t) is the luminance value of the current pixel, Ipf (x, y, t) is the correspondent filtered version and $\underline{div}$ is the integer division. Two are the main advantages of pre-filtering prior to motion estimation: the first is an increase of the vector field coherency, due to the "noise" reduction effect of the filtering itself, the second is a decrease of the computational complexity, since the sub-pixel accuracy is not necessary in this case.

The computational complexity of the motion estimation is practically independent on the actual (variable) frame rate, for n ≤ 4. In fact, the number of iterations per images pair varies according to the time interval between two decoded pictures, as shown in Table 1. When n ≥ 5, we use the same iterations as with n = 4.

Table 1: Relation between iterations on pre-filtered images

| time interval $T = nT^q$ | skipped images | iterations on pre-filtered images | iterations on original (dec.) images |
|---|---|---|---|
| n = 1 | 0 | 0 | 0 |
| n = 2 | 1 | 1 | 1 |
| n = 3 | 2 | 1 | 2 |
| n = 4 | 3 | 2 | 2 |

It is possible to decrease the computational price of the motion estimation by halving the number of block vectors calculated, that is by using block subsampling [4], [5]. The subsampled block grid is arranged in a quincunx pattern. If $\overline{d}_m = \overline{d}(\overline{b}_c, t)$ is a missing vector, it can be calculated from the horizontally neighboring available ones $\overline{d}_a$, according to the following formula:

$$\overline{d}_m = median(\overline{d}_l, \overline{d}_r, \overline{d}_{av}) \tag{7}$$

where

$$\overline{d}_l = \overline{d}_a(\overline{b}_c - \begin{pmatrix} X \\ 0 \end{pmatrix}, t)$$

$$\overline{d}_r = \overline{d}_a(\overline{b}_c + \begin{pmatrix} X \\ 0 \end{pmatrix}, t)$$

$$\overline{d}_{av} = \frac{1}{2}(\overline{d}_t + \overline{d}_b)$$

and

$$\overline{d}_t = \overline{d}_a(\overline{b}_c - \begin{pmatrix} 0 \\ Y \end{pmatrix}, t)$$

$$\overline{d}_b = \overline{d}_a(\overline{b}_c + \begin{pmatrix} 0 \\ Y \end{pmatrix}, t)$$

The median interpolation acts separately on the horizontal and vertical components of the motion vectors. From one iteration to the following we change the subsampling grid in order to refine the vectors that were interpolated in the previous iteration.

The matching error is calculated on blocks of sizes 2X and 2Y, but the best vector is assigned to smaller blocks with dimensions X and Y. This feature is called block overlapping, because the larger 2X 2Y block overlaps the final X·Y block in horizontal and vertical direction. It contributes to improve the coherence and reliability of the motion vector field.

Finally, since the calculational effort required for a block matcher is almost linear with the pixel density in a block, we also introduce a pixel subsampling factor of four. Hence there are 2X 2Y/4 pixels in a large 2X2Y block where the matching error is calculated for every iteration. Again, from an iteration to the following, we change also the pixel subsampling grid to spread the number of matching pixels.

This new block matching motion estimator can calculate the object's true motion with great accuracy, yielding a very coherent motion vector field, from the spatial and temporal points of view. This means that the VLC differential encoding of macro-block vectors should achieve lower bit-rates in comparison with vectors estimated from "classical" full-search block matchers.

In the following part of this disclosure we will describe the real innovative part of our proposal, the almost non-transmission of motion vectors (NO-MV). In practice, we want to limit as much as possible the transmission of motion information, in order to re-utilize or save the bit-budget normally required for the motion vectors differential encoding and transmission, respectively to improve the image quality or to increase the channel efficiency.

The procedure is explained in the following:

1. The encoding terminal (ET) encodes the first picture ($P_1$) of a sequence as an I-frame and transmits it. The decoding terminal (DT) decodes $P_1$ as an I-frame. This step is fully H.263 standard compliant.

2. On the transmitting site, ET encodes the second picture ($P_2$), after proper motion estimation and temporal prediction, as a P-frame and sends it. It also encodes and sends the related motion vectors ($MV_{p1-p2}$). On the receiving site, DT reconstructs $P_2$ as a P-frame, after motion compensation with $MV_{p1-p2}$. Again, this step is fully H.263 standard compliant. Both the terminals store $MV_{p1-p2}$ in their proper memory buffers, to use the same vectors also with the next picture, $P_3$.

3. From this point we deviate from the H.263 standard. On the transmitting site, ET uses$MV_{P1-P2}$ to temporally predict also $P_3$, profiting from the temporal consistency of motion. It then encodes and transmits $P_3$ without any supplementary motion vectors information. At the same time it performs a motion estimation between $P_3$ and $P_2$ to obtain $MV_{P2-P3}$, which are now stored in its memory buffer. On the receiving site, DT reconstructs $P_3$ as a P-frame, after motion compensation with $MV_{P1-P2}$. In parallel, it estimates its own vectors $MV_{P2-P3}$, between $P_3$ and $P_2$, and store them in its memory buffer.

4. On the transmitting site, ET uses MVP2-P3 to temporally predict $P_4$, profiting from the temporal consistency of motion. It then encodes and transmits $P_4$ without any supplementary motion vectors information. In parallel, it performs a motion estimation between $P_5$ and $P_4$ to obtain $MV_{P4-P5}$, which are now stored in the memory buffer. On the receiving site, DT reconstructs $P_4$ as a P-frame, after motion compensation with the previously stored $MV_{P2-P3}$. At the same time it estimates its own vectors $MV_{P3-P4}$, between $P_3$ and $P_{4'}$ and store them in the memory buffer.

5. The process goes on indefinitely or re-starts from point 1 if a new I-frame is encoded and transmitted.

The amount of motion vector bits saved can be used to reduce the transmission channel capacity, without depreciating the image quality, or to allow a less coarse DCT coefficients quantization, thus considerably improving the image quality. In both applications, the method requires a motion estimator, or a similar processing module, also in the video decoding terminal. However, nowadays there are high-quality, low-cost motion estimators available on the market, such as the one we presented above. The temporal resolution quality remains almost unchanged, because of: 1) the good performances of the motion estimation stages used by both encoding and decoding terminals, and 2) the temporal consistency of motion, which allows in most cases a good prediction even if the previous motion vector field is used instead of the actual one. All errors in this assumption can be repaired by the encoder, for example, by predictive coding on the vector field.

This solution has not been mentioned in the standard, but it is fully H.263 compatible. As the method is not yet H.263 standardized, it has to be signalled between the two terminals, via the H.245 protocol. At the start of the multimedia communication the two terminals exchange data about their processing standard and non-standard capabilities (see [3] for more details). If we assume that, during the communication set-up, both terminals declare the NO-MV capability, they will easily interface with each other. Hence, the video encoder will transmit no motion vectors, or only an initial motion information, while the video decoder will calculate or predict its own motion vectors.

If at least one terminal declares to have not this capability, a flag can be forced in the other terminal to switch it off.

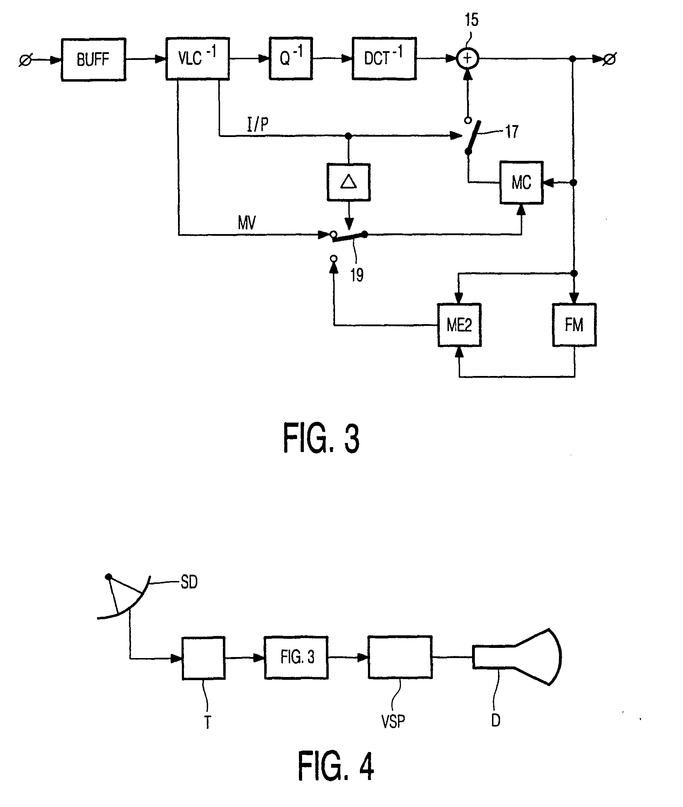

Fig. 3 shows a decoder in accordance with the present invention. An incoming bit-stream is applied to a buffer BUFF having an output which is coupled to an input of a variable length decoder $VLC^{-1}$. The variable length decoder $VLC^{-1}$ supplies image data to a cascade arrangement of an inverse quantizer $Q^{-1}$ and a DCT decoder $DCT^{-1}$ . An output of the DCT decoder $DCT^{-1}$ is coupled to a first input of an adder 15, an output of which supplies the output signal of the decoder. The variable length decoder $VLC^{-1}$ further supplies motion vectors MV for the first predictively encoded frame. Thru a switch 19, the motion vectors are applied to a motion-compensation unit MC which receives the output signal of the decoder. An output signal of the motion-compensation unit MC is applied to a second input of the adder 15 thru a switch 17 which is controlled by an Intra-frame / Predictive encoding control signal I/P from the variable length decoder $VLC^{-1}$.

In accordance with a primary aspect of the present invention, the decoder comprises its own motion vector estimator ME2 which calculates motion vectors in dependence on the output signal of the decoder and a delayed version of that output signal supplied by a frame delay FM. The switch 19 applies the motion vectors from the variable length decoder $VLC^{-1}$ or the motion vectors from the motion estimator ME2 to the motion-compensation unit MC. The switch 19 is controlled by the control signal I/P delayed over a frame delay by means of a delay unit $\Delta$.

Fig. 4 shows a image signal reception device in accordance with the present invention. Parts (T, Fig. 3, VSP) of this device may be part of a multi-media apparatus. A satellite dish SD receives a motion-compensated predictively encoded image signal in accordance with the present invention. The received signal is applied to a tuner T, the output signal of which is applied to the decoder of Fig. 3. The decoded output signal of the decoder of Fig. 3 is subjected to normal video signal processing operations VSP, the result of which is displayed on a display D.

In sum, a primary aspect of the invention relates to a low bit-rate video coding method fully compatible with present standards, such as the H.263 standard. The motion vector information is encoded and transmitted only one time, together with the first P-frame following an I-frame (the first images pair of a sequence). Until the next I-frame, the motion vectors calculated during an images pair and properly stored in a memory buffer are applied for the temporal prediction during the subsequent images pair, and so on. This procedure re-starts in presence of a new I-frame. Both the encoding and decoding terminals calculate their own motion vectors and store them in a proper local memory buffer. It can be used at CIF (352 pixels by 288 lines), QCIF (176 pixels by 144 lines), and SQCIF (128 pixels per 96 lines) resolution.

The following features of the invention are noteworthy.

A method and an apparatus for H.263 low bit-rate video encoding and decoding stages, which allow a reduction of the total bit-rate, since the motion vector information is transmitted only during the first P-frame following an 1-frame. The picture quality is very similar to the one achievable by the standard H.263 approach.

A method and an apparatus for H.263 low bit-rate video encoding and decoding stages, which allow a consistent improving of the image quality when compared to the standard H.263 approach, while the target bit-rate remains very similar.

A method and an apparatus which use a memory buffer, placed in the motion estimation stage of the temporal prediction loop of the H.263 video encoder, to store the motion vectors related to an images pair. Such vectors will be used for the temporal prediction of the subsequent images pair.

A method and an apparatus which use a memory buffer and a motion estimation stage, placed in the H.263 video decoder. The memory buffer is necessary to store the motion vectors calculated from the motion estimation stage. They are related to a certain images pair and will be used for the temporal prediction of the subsequent images pair.

A method and an apparatus in which the decision to send the motion vectors information only during the first P-frame following an I-frame is taken from the "INTRA/INTER coding selection" module (see Fig. 1) of the video encoder.

A method and an apparatus where a new block matching motion estimator is introduced in the temporal prediction loop of the H.263 video encoder. It is also used in the H.263 video decoder. This estimators yields a very coherent motion vector field and its complexity is much lower than "classical" full-search block matchers.

In one preferred embodiment, an encoded signal comprises:

at least one first intra-frame encoded frame;
at least one second motion-compensated predictively encoded frame together with corresponding motion vectors; and
at least one third motion-compensated predictively encoded frame without corresponding motion vectors.

In another preferred embodiment, an encoded signal comprises:

at least first and second intra-frame encoded frame (between which a decoder can estimate motion vectors); and
at least one third motion-compensated predictively encoded frame without corresponding motion vectors (as the decoder can now independently determine the correct motion vectors). In this embodiment, no motion vectors are transmitted at all.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. In the claims, the supplying step covers both supplying to a transmission medium and supplying to a storage medium. Also, a receiving step covers both receiving from a transmission medium and receiving from a storage medium. The invention can be implemented by means of hardware comprising several distinct elements, and by means of a suitably programmed computer. In the device claim enumerating several means, several of these means can be embodied by one and the same item of hardware.

References:

## EP 0 953 253 B1

[1] ITU-T DRAFT Recommendation H.263, Video coding for low bit rate communication, 2 May 1996.

[2] K. Rijkse, "ITU standardisation of very low bit rate video coding algorithms", Signal Processing: Image Communication 7, 1995, pp 553-565.

[3] ITU-T DRAFT Recommendation H.245, Control protocol for multimedia communications, 27 November 1995.

[4] G. de Haan, P.W.A.C. Biezen, H. Huijgen, O. A. Ojo, "True motion estimation with 3-D recursive search block matching", IEEE Trans. Circuits and Systems for Video Technology, Vol. 3, October 1993, pp 368-379.

[5] G. de Haan, P.W.A.C. Biezen, "Sub-pixel motion estimation with 3-D recursive search block-matching", Signal Processing: Image Communication 6 (1995), pp. 485-498.

[6] P. Lippens, B. De Loore, G. de Haan, P. Eeckhout, H. Huijgen, A. Loning, B. McSweeney, M. Verstraelen, B. Pham, J. Kettenis, "A video signal processor for motion-compensated field-rate up-conversion in consumer television", IEEE Journal of Solid-state Circuits, Vol. 31, no. 11, November 1996, pp. 1762-1769.

**Claims**

1. A method of motion-compensated predictively encoding image signals, said method comprising the steps of:

    - motion-compensated predictively encoding at least one frame by means of motion vectors, and
    - supplying said frame without said motion vectors,

    **characterized in that** in said step of motion-compensated predictively encoding said at least one frame, motion vectors between a preceding pair of frames are used.

2. An encoding method as claimed in claim 1, comprising the steps of:

    - intra frame encoding and supplying at least one first frame;
    - motion-compensated predictively encoding and supplying at least one second frame together with motion vectors; and
    - motion-compensated predictively encoding and supplying at least one third frame without supplying motion vectors.

3. A method of motion-compensated predictively decoding image signals, said method comprising the steps of:

    - receiving (BUFF) at least one motion-compensated predictively encoded frame from a transmission of recording medium without receiving motion vectors corresponding to said frame from said medium; and
    - motion-compensated predictively decoding (VLC$^{-1}$, Q$^{-1}$, DCT$^{-1}$, ,15, MC, 17, FM, ME2, 19, $\Delta$)said at least one frame,

    **characterized in that** in said step of motion-compensated predictively decoding said at least one frame, motion vectors between a preceding pair of frames are used.

4. A decoding method as claimed in claim 3, further comprising the step of calculating motion vectors in dependence upon decoded frames.

5. A decoding method as claimed in claim 3 comprising the steps of:

    - intra-frame decoding at least one frame;
    - motion-compensated predictively decoding at least one second frame received from said medium together with motion vectors corresponding to said at least one second frame; and
    - motion-compensated predictively decoding at least one third frame received from said medium without motion vectors.

6. A device for motion-compensated predictively decoding image signals, comprising:

    - means (BUFF) for receiving at least one motion-compensated predictively encoded frame from a transmission or recording medium without receiving motion vectors corresponding to said frame from said medium; and
    - means (VLC$^{-1}$, Q$^{-1}$, DCT$^{-1}$, 15, MC, 17, FM, ME2, 19, $\Delta$) for motion-compensated predictively decoding said at least one frame,

**characterized in that** motion vectors between a preceding pair of frames are applied to said means for motion-compensated predictively decoding.

7. A multi-media apparatus, comprising:

- means (T) for receiving motion-compensated predictively encoded image signals; **characterized by**
- a motion-compensated predictively decoding device as claimed in claim 6 for generating decoded image signals.

8. An image signal display apparatus, comprising;

- means(T) for receiving motion-compensated predictively encoded image signals and
- means (D) for displaying decoded image signals, **characterized by**
- a motion-compensated predictive decoding device as claimed in claim 6 for generating decoded image signals.

**Patentansprüche**

1. Verfahren zur bewegungskompensierten prädiktiven Codierung von Bildsignalen, wobei das genannte Verfahren die nachfolgenden Verfahrensschritte umfasst:

- das bewegungskompensierte prädiktive Codieren wenigstens eines Frames mit Hilfe von Bewegungsvektoren, und
- das Zuführen des genannten Frames ohne die genannten Bewegungsvektoren,

**dadurch gekennzeichnet, dass** in dem genannten Schritt der bewegungskompensierten prädiktiven Codierung des genannten wenigstens einen Frames Bewegungsvektoren zwischen einem vorhergehenden Framepaar verwendet werden.

2. Codierungsverfahren nach Anspruch 1, das die nachfolgenden Schritte umfasst:

- Intraframe-Codierung und Lieferung wenigstens eines ersten Frames,
- bewegungskompensierte prädiktive Codierung und Lieferung wenigstens eines zweiten Frames zusammen mit Bewegungsvektoren; und
- bewegungskompensierte prädiktive Codierung und Lieferung wenigstens eines dritten Frames ohne Lieferung von Bewegungsvektoren.

3. Verfahren zum bewegungscodierten prädiktiven Decodieren von Bildsignalen, wobei dieses genannte Verfahren die nachfolgenden Verfahrensschritte umfasst:

- das Empfangen (BUFF) wenigsten eines bewegungskompensierten prädiktiv codierten Frames von einer Übertragung oder einem Aufzeichnungsmedium ohne Empfang von Bewegungsvektoren entsprechend dem genannten Frame von dem genannten Medium; und
- bewegungskompensierte prädiktive Decodierung (VLC$^{-1}$, Q$^{-1}$, DCT$^{-1}$, 15, MC, 17, FM, ME2, 19, $\Delta$) des genannten wenigstens einen Frames,

**dadurch gekennzeichnet, dass** in dem genannten Schritt der bewegungskompensierten prädiktiven Decodierung des genannten wenigstens einen Frames die Bewegungsvektoren zwischen einem vorhergehenden Framepaar verwendet werden.

4. Decodierungsverfahren nach Anspruch 3, wobei dieses Verfahren weiterhin den Schritt der Berechnung von Bewegungsvektoren umfasst, und zwar in Abhängigkeit von decodierten Frames.

5. Decodierungsverfahren nach Anspruch 3, das die nachfolgenden Verfahrensschritte umfasst:

- Intraframe-Decodierung wenigstens eines Frames,
- bewegungskompensierte prädiktive Decodierung wenigstens eines zweiten Frames, empfangen von dem genannten Medium zusammen mit Bewegungsvektoren entsprechend dem genannten wenigstens einen zweiten Frame, und
- bewegungskompensierte prädiktive Decodierung wenigstens eines dritten Frames, empfangen von dem genannten Medium ohne Bewegungsvektoren.

**6.** Anordnung zur bewegungskompensierten prädiktiven Decodierung von Bildsignalen, wobei diese Anordnung Folgendes umfasst:

- Mittel (BUFF) zum Empfangen wenigsten eines bewegungskompensierten prädiktiv codierten Frames von einer Übertragung oder einem Aufzeichnungsmedium ohne Empfang von Bewegungsvektoren entsprechend dem genannten Frame von dem genannten Medium; und
- Mittel (VLC$^{-1}$, Q$^{-1}$, DCT$^{-1}$, 15, MC, 17, FM, ME2, 19, $\Delta$) zur bewegungskompensierten prädiktiven Decodierung des genannten wenigstens einen Frames,

**dadurch gekennzeichnet, dass** den genannten Mitteln zur bewegungskompensierten prädiktiven Decodierung Bewegungsvektoren zwischen einem vorhergehenden Framepaar zugeführt werden.

**7.** Multimediagerät, das Folgendes umfasst:

- Mittel (T) zum Empfangen bewegungskompensierter prädiktiv codierter Bildsignale, **gekennzeichnet durch**:
- eine bewegungskompensierte prädiktive Decodieranordnung nach Anspruch 6 zum Erzeugen decodierter Bildsignale.

**8.** Bildsignalwiedergabegerät, das Folgendes umfasst:

- Mittel (T) zum Empfangen bewegungskompensierter prädiktiv codierter Bildsignale und
- Mittel (D) zur Wiedergabe decodierter Bildsignals, **gekennzeichnet durch**
- eine bewegungskompensierte Decodieranordnung nach Anspruch 6 zum Erzeugen decodierter Bildsignale.

## Revendications

**1.** Procédé de codage prédictif avec compensation de mouvement de signaux image, ledit procédé comprenant les étapes suivantes :

- le codage prédictif avec compensation de mouvement d'au moins une image complète au moyen de vecteurs de mouvement, et
- la fourniture de ladite image complète sans lesdits vecteurs de mouvement ;

**caractérisé en ce que** dans ladite étape de codage prédictif avec compensation de mouvement de ladite au moins une image complète, des vecteurs de mouvement entre une paire précédente d'images complètes sont utilisés.

**2.** Procédé de codage suivant la revendication 1, comprenant les étapes suivantes :

- le codage Intra et la fourniture d'au moins une première image complète;
- le codage prédictif avec compensation de mouvement et la fourniture d'au moins une deuxième image complète ainsi que de vecteurs de mouvement, et
- le codage prédictif avec compensation de mouvement et la fourniture d'au moins une troisième image complète sans fournir de vecteurs de mouvement.

**3.** Procédé de décodage prédictif avec compensation de mouvement de signaux image, ledit procédé comprenant les étapes suivantes :

- la réception (BUFF) d'au moins une image complète codée par codage prédictif compensée en mouvement d'un support de transmission ou d'enregistrement sans recevoir de vecteurs de mouvement correspondant à ladite image complète dudit support, et
- le décodage prédictif avec compensation de mouvement (VLC$^{-1}$, Q$^{-1}$, DCT$^{-1}$, 15, MC, 17, FM, ME2, 19, $\Delta$) de ladite au moins une image complète ;

**caractérisé en ce que** dans ladite étape de décodage prédictif avec compensation de mouvement de ladite au moins une image complète, des vecteurs de mouvement entre une paire précédente d'images complètes sont utilisés.

4. Procédé de décodage suivant la revendication 3, comprenant en outre l'étape de calcul de vecteurs de mouvement en fonction d'images complètes décodées.

5. Procédé de décodage suivant la revendication 3, comprenant les étapes suivantes :

- le décodage Intra d'au moins une première image complète;
- le décodage prédictif avec compensation de mouvement d'au moins une deuxième image complète reçue dudit support ainsi que de vecteurs de mouvement correspondant à ladite au moins une deuxième image complète, et
- le décodage prédictif avec compensation de mouvement d'au moins une troisième image complète reçue dudit support sans vecteurs de mouvement.

6. Dispositif pour décoder par décodage prédictif avec compensation de mouvement des signaux image, comprenant :

- des moyens (BUFF) pour recevoir au moins une image complète codée par codage prédictif compensée en mouvement d'un support de transmission ou d'enregistrement sans recevoir de vecteurs de mouvement correspondant à ladite image complète dudit support, et
- des moyens (VLC$^{-1}$, Q$^{-1}$, DCT$^{-1}$, 15, MC, 17, FM, ME2, 19, $\Delta$) pour décoder par décodage prédictif avec compensation de mouvement ladite au moins une image complète ;

**caractérisé en ce que** des vecteurs de mouvement entre une paire précédente d'images complètes sont fournis auxdits moyens pour un décodage prédictif avec compensation de mouvement.

7. Appareil multimédia, comprenant:

- des moyens (T) pour recevoir des signaux image codés par codage prédictif compensés en mouvement, **caractérisé par**
- un dispositif de décodage prédictif avec compensation de mouvement suivant la revendication 6 pour générer des signaux image décodés.

8. Appareil d'affichage de signal image, comprenant :

- des moyens (T) pour recevoir des signaux image codés par codage prédictif compensés en mouvement ;
- des moyens (D) pour afficher des signaux image décodés, **caractérisé par**
- un dispositif de décodage prédictif avec compensation de mouvement suivant la revendication 6 pour générer des signaux image décodés.

**EP 0 953 253 B1**

FIG. 1

FIG. 2

FIG. 3

FIG. 4